# EUROPEAN PATENT APPLICATION

(11) **EP 1 156 695 A2**
(43) Date of publication of application: **21.11.2001**
(21) Application number: 01111228.1
(22) Date of filing: 15.05.2001
(51) Int. Cl.: H04Q 7/38

(54) **Incoming call blocking system and method for mobile terminal**

(30) Priority: 17.05.2000 JP 2000145570
(71) Applicant: NEC CORPORATION, Tokyo (JP)
(72) Inventor: Yamane, Isamu, Minato-ku, Tokyo (JP)
(74) Representative: Baronetzky, Klaus, Dipl.-Ing.

(57) **Abstract**

In the incoming call blocking system, a mobile terminal (20) sends position information from a GPS receiving section to a switchboard through a plurality of base stations (30-60), the switchboard (10) stores the received position information of the mobile terminal (20) into an area of the mobile terminal in a movement monitoring memory (90), calculates by comparing the previous position information and the present position information for a difference to determine a moving speed of the mobile terminal (20), and judges whether the mobile terminal (20) is moving at a high speed to block incoming calls.

## Description

### BACKGROUNDS OF THE INVENTION

### FIELD OF THE INVENTION

The present invention relates to an incoming call blocking system and method for a mobile terminal in a mobile communication system, and more particularly to an incoming call blocking system and method for a mobile terminal moving at a high speed.

### DESCRIPTION OF THE RELATED ART

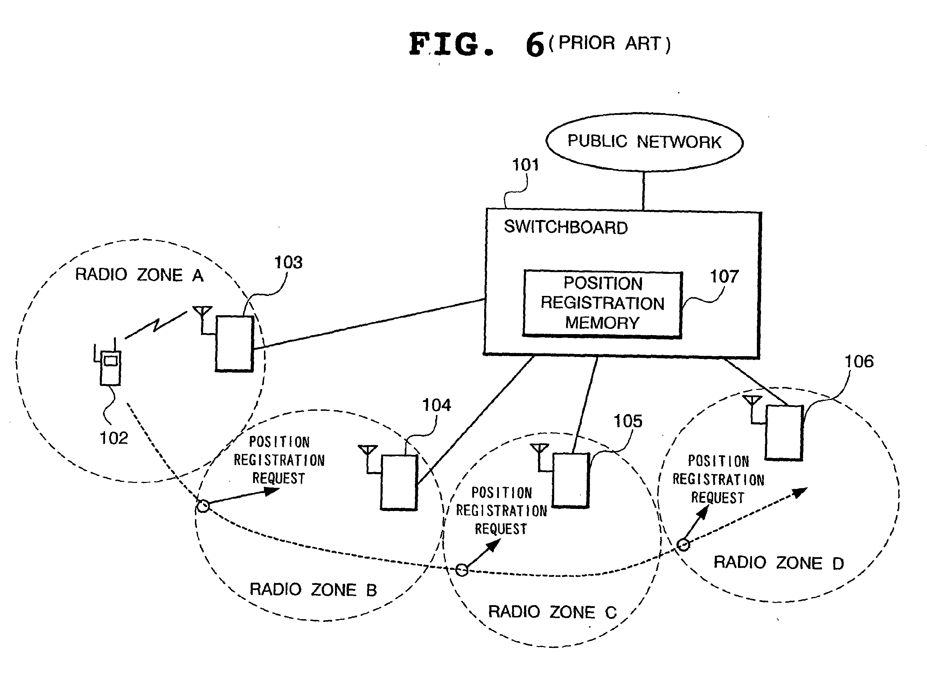

Fig. 6 is a system configuration diagram showing the structure of a conventional incoming call blocking system.

Conventionally, an incoming call blocking system for a mobile terminal in a mobile communication system comprises a switchboard 101, a plurality of base stations 103 to 106 connected to the switchboard 101 by dedicated lines and a mobile terminal 102 present in respective radio zones A to D of the respective base stations 103 to 106, and controls the connection of the mobile terminal 102 by the switchboard 101 and the base stations 103 to 106.

The switchboard 101 is connected to a public network in order to connect to other unshown mobile terminals or stationary terminals covered by another unshown switchboard. And, the switchboard 101 is provided with a position registration memory 107 which stores position information indicating a position of the mobile terminal 102 when the mobile terminal 102 requests position registration.

The mobile terminal 102 requests the switchboard 101 for position registration through the base stations 103 to 106 every time it moves among the radio zones A to D. When the switchboard 101 receives the position registration request from the mobile terminal 102, it gets radio zone information of the position where the mobile terminal 102 is present from the received position registration request and stores it as position information indicating a place where the mobile terminal 102 is now present into the position registration memory 107. Area numbers of the radio zones A to D where the mobile terminal 102 is now present and area numbers of the radio zones A to D where the mobile terminal 102 has moved in the past are stored for each covered mobile terminal 102 into the position registration memory 107 in the switchboard 101.

Now, it is assumed that the mobile terminal 102 is moving through the radio zone A, the radio zone B, the radio zone C and the radio zone D in this order. When the mobile terminal 102 moves first from the radio zone A to the radio zone B, it receives an electric wave from the base station 104 and identifies that it is different from the area number of the previous radio zone A and requests the position registration to the switchboard 101 through the base station 104. Then, the switchboard 101 recognizes from the received position registration request that the mobile terminal 102 has moved to the radio zone B of the base station 104. Similarly, the mobile terminal 102 requests the position registration to the switchboard 101 every time the mobile terminal 102 moves among the radio zones A to D, and the area numbers of the radio zones A to D where the mobile terminal 102 is present are stored in the position registration memory 107 of the switchboard 101.

The position registration request from the mobile terminal 102 is generated every time the mobile terminal 102 moves among the radio zones A to D, so that a moving state of the mobile terminal can be seen to some degree by monitoring a frequency of position registration requests. The switchboard 101 checks a frequency of position registration requests in a predetermined time, judges that the mobile terminal 102 is moving at a high speed if the frequency exceeds for example a threshold of three times, sets an incoming call blocking flag corresponding to the mobile terminal 102 in the position registration memory 107 to "YES" to block additional incoming calls to the mobile terminal 102, and sends a message about the incoming call block to calling parties.

When the frequency of position registration requests from the mobile terminal 102 in a predetermined time becomes the threshold of three times or below, the switchboard 101 judges that the mobile terminal 102 is not moving at a high speed and sets the incoming call blocking flag pertinent to the mobile terminal 102 in the position registration memory 107 to "NO". And, the incoming call block to the mobile terminal 102 is released.

However, the prior art cannot detect that the mobile terminal is moving at a high speed unless it moves among the radio zones. Therefore, it does not function on the mobile terminal moving in the same radio zone and does not detect that the mobile terminal is moving at a high speed until the number of radio zones it has moved becomes for example three or more. Thus, setting of the incoming call block is delayed, and it also takes time to detect that the mobile terminal moving at a high speed has changed to move at a low speed or stopped moving. Therefore, there were disadvantages that setting for cancellation of the incoming call block was delayed, and normal service could not be offered.

### SUMMARY OF THE INVENTION

The present invention was achieved to remedy the aforesaid disadvantages. And, it is an object of the invention to provide an incoming call blocking system and an incoming call blocking method which can quickly detect that the mobile terminal is moving at a high speed to quickly block an incoming call, can quickly detect transition from a high speed to a low speed or a stationary state so as to cancel the incoming call block quickly, and can make the incoming call block to the mobile terminal moving at a high speed without degrading the benefit and convenience of mobile transmission service, thereby preventing an accident of automobiles and improving manners in a train.

According to the first aspect of the invention, a mobile communication system which is comprised of a mobile terminal, a switchboard for controlling the connection of the mobile terminal and a plurality of base stations for relaying a radio signal with the mobile terminal to the switchboard, wherein the switchboard comprises
average moving speed calculation unit which calculates a moving speed of the mobile terminal from the position information of the mobile terminal which is sent from the mobile terminal, and
incoming call blocking unit which blocks incoming calls to the mobile terminal when the moving speed of the mobile terminal calculated by the moving speed calculation unit exceeds a predetermined threshold.

In the preferred construction, the mobile terminal sends the position information of the mobile terminal which the mobile terminal has received on the basis of a GPS signal from a global positioning system satellite to the switchboard periodically.

In another preferred construction, the mobile terminal includes position information transmission unit which send the position information of the mobile terminal to the switchboard through the base stations periodically, and
the switchboard includes storage unit which stores the present and previous position information from the mobile terminal.

In another preferred construction, the mobile terminal comprises
position information obtaining unit which obtains position information of the mobile terminal periodically according to a GPS signal from a global positioning system satellite, and
position information transmission unit which sends the position information of the mobile terminal to the switchboard through the base stations periodically,
the switchboard comprises storage unit which store the present and previous position information from the mobile terminal.

In another preferred construction, the mobile terminal comprises registration request transmission unit which sends a registration request of the radio zones where the mobile terminal is present now to the switchboard when the mobile terminal is moving among the radio zones of the base stations, and
the mobile terminal sends the position information for a predetermined period when the position registration request is sent by the position registration request transmission unit.

In another preferred construction, the mobile terminal comprises
position information obtaining unit which obtains position information of the mobile terminal periodically according to a GPS signal from a global positioning system satellite,
position information transmission unit which sends the position information of the mobile terminal to the switchboard through the base stations, and
registration request transmission unit which sends a registration request of the radio zones where the mobile terminal is present now to the switchboard when the mobile terminal moves among the radio zones of the base stations, and
sends the position information for a predetermined period when the registration request is sent by the registration request transmission unit.

According to the second aspect of the invention, an incoming call blocking method for a mobile communication system which is comprised of a mobile terminal, a switchboard for controlling the connection of the mobile terminal and a plurality of base stations which relay a radio signal with the mobile terminal to the switchboard, comprising the following steps
obtaining position information of the mobile terminal,
calculating a moving speed of the mobile terminal from the determined position information of the mobile terminal, and
blocking incoming calls to the mobile terminal when the calculated moving speed of the mobile terminal exceeds a predetermined threshold.

In the preferred construction, position information of the mobile terminal is obtained according to a GPS signal from the global positioning system satellite, and
the obtained position information of the mobile terminal is sent to the switchboard periodically.

In another preferred construction, the mobile terminal obtains a position of the mobile terminal periodically and sends the obtained position information of the mobile terminal to the switchboard,
the switchboard stores the position information from the mobile terminal, and
a moving speed of the mobile terminal is calculated from the stored position information of the mobile terminal.

In another preferred construction, the mobile terminal sends a registration request of the radio zones where the mobile terminal is present now to the base stations when the mobile terminal is moving among the radio zones of the base stations, and
the mobile terminal sends the position information for a predetermined period when the mobile terminal sends the registration request.

According to another aspect of the invention, a switchboard of a mobile communication system which is comprised of a mobile terminal, a switchboard for controlling the connection of the mobile terminal and a plurality of base stations for relaying a radio signal with the mobile terminal to the switchboard, comprises
average moving speed calculation unit which calculate a moving speed of the mobile terminal from position information of the mobile terminal which is sent from the mobile terminal, and
incoming call blocking unit which block incoming calls to the mobile terminal when a moving speed of the mobile terminal calculated by the moving speed calculation unit exceeds a predetermined threshold.

In the preferred construction, which periodically receives the position information of the mobile terminal obtained according to a GPS signal from the global positioning system satellite and calculates a moving speed of the mobile terminal every time the position information is received.

In another preferred construction, the switchboard of a mobile communication system further comprises storage unit for storing the present and previous position information from the mobile terminal.

Other objects, features and advantages of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a system configuration diagram showing the structure of an incoming call blocking system of an embodiment according to the present invention;
Fig. 2 is a block diagram showing the structure of the mobile terminal shown in Fig. 1;
Fig. 3 is a block diagram showing the structure of a switchboard of Fig. 1;
Fig. 4 is a flow chart for illustrating the contents of processing by the switchboard of the incoming call blocking system of the invention;
Fig. 5 is a diagram for illustrating an example of a movement monitoring memory disposed in the switchboard of Fig. 1; and
Fig. 6 is a system configuration diagram showing the structure of a conventional incoming call blocking system.

### DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

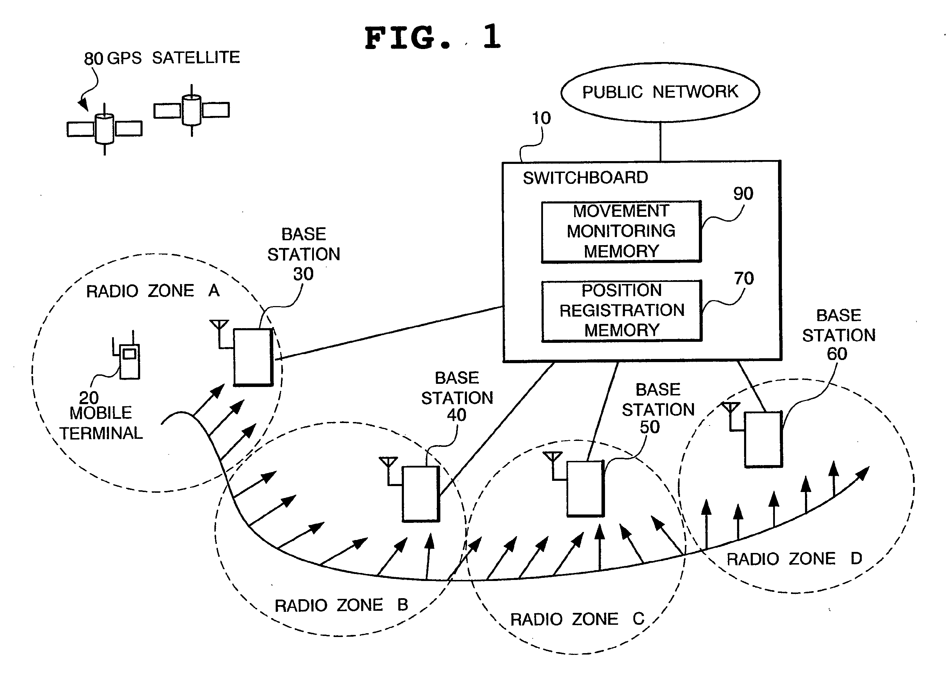

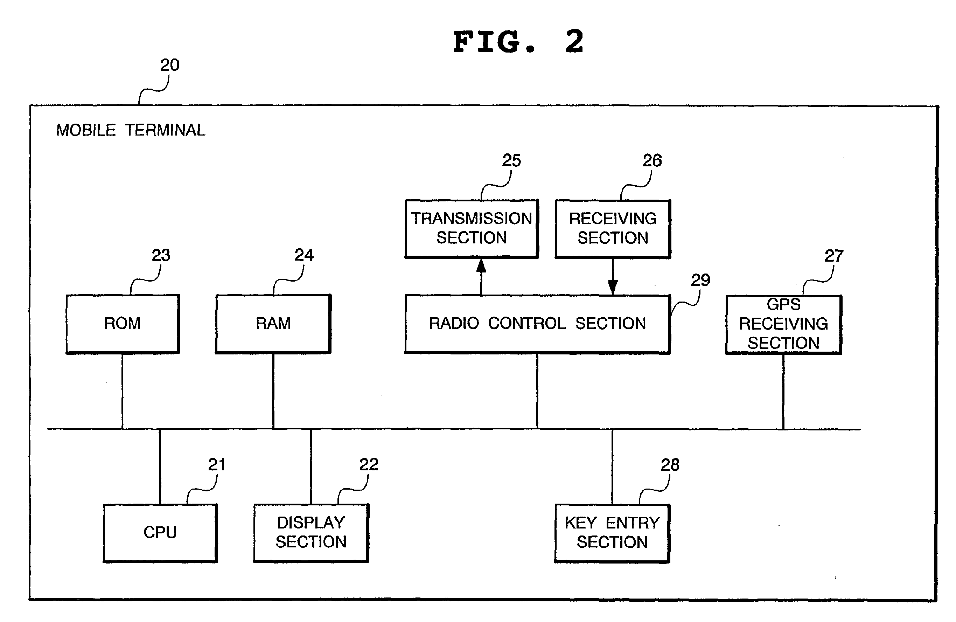

Fig. 1 is a system configuration diagram showing the structure of an embodiment of the incoming call blocking system to which the present invention pertains. Fig. 2 is a block diagram showing the structure of the mobile terminal shown in Fig. 1.

The incoming call blocking system of this embodiment comprises a switchboard 10, a plurality of base stations 30 to 60 connected to the switchboard 10 by dedicated lines, a mobile terminal 20 present in radio zones A to D of the respective base stations 30 to 60. This incoming call blocking system controls the connection of the mobile terminal 20 by the switchboard 10 and the base stations 30 to 60.

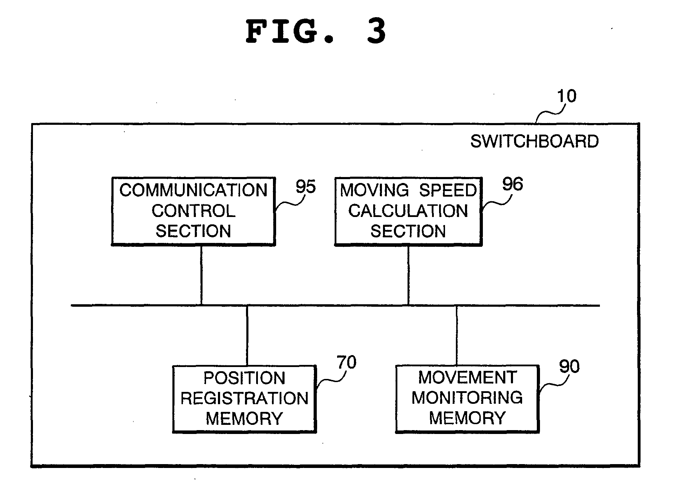

The switchboard 10 is connected to a public network in order to connect to unshown mobile terminals or stationary terminals covered by another unshown switchboard. And, as shown in Fig. 3, the switchboard 10 has a communication blocking section 95 which controls the connection for calling/receiving by a mobile terminal according to position information of the mobile terminal 20, a moving speed calculation section 96 which calculates a moving speed (or average moving speed) of the mobile terminal 20, a position registration memory 70 which stores position information indicating a position of the mobile terminal 20 when it requests the position registration, and a movement monitoring memory 90 which monitors the movement of the mobile terminal 20 to block incoming calls.

The mobile terminal 20 comprises CPU 21 which controls a general operation of the mobile terminal 20, a display section 22 which displays a calling telephone number and the like, ROM 23 which stores a blocking program and the like, RAM 24 which temporarily stores an area number of any of the radio zones A to D, a transmission section 25 which transmits a control signal, an aural signal, etc. to the base stations 30 to 60, a receiving section 26 which receives a control signal, an aural signal, etc. from the base stations 30 to 60, a GPS receiving section 27 which receives a GPS signal from a global positioning system (hereinafter called GPS) satellite 80, a key input section 28 which enters key information such as telephone numbers and the like, and a radio control section 29 which controls the transmission section 25 and the receiving section 26. And, it is connected to the switchboard 10 by radio communications with the base stations 30 to 60.

The CPU 21 of the mobile terminal 20 receives key information from the key input section 28 to show it on the display section 22 and outputs a necessary control signal to the radio control section 29. The radio control section 29 sends the control signal received from the CPU 21 and an aural signal from an unshown microphone to the base stations 30 to 60 through the transmission section 25.

The radio control section 29 receives the aural and control signals from the base stations 30 to 60 through the receiving section 26, separates them to the aural signal and the control signal, outputs the separated control signal to the CPU 21, and outputs the separated aural signal to an unshown loud speaker.

The CPU 21 compares the area number of any of the radio zones A to D contained in the control signal from the base stations 30 to 60 with the area numbers of the radio zones A to D stored in the RAM 24, judges that the mobile terminal 20 has moved the radio zones if they are different, transmits a position registration request to the switchboard 10 through the base stations 30 to 60, and updates the area numbers of the radio zones A to D stored in the RAM 24.

The switchboard 10 receives the position registration request from the mobile terminal 20, takes information of a radio zone, where the mobile terminal 20 is present, from the received position registration request, and stores it as radio zone information indicating the position where the mobile terminal 20 is now present into the position registration memory 70.
The radio zone information of the mobile terminal 20 stored in the position registration memory 70 is referred to when the switchboard 10 performs the usual connection control of the mobile terminal 20 by the communication control section 93.

The GPS receiving section 27 periodically receives the GPS signals from three GPS satellites 80 by activating according to a timer, calculates a delay of the received GPS signal to determine the present position of the mobile terminal 20, and outputs position information indicating the determined present position to the CPU 21. The position information obtained here is information indicating a more detailed position as compared with the aforesaid radio zone information.

The CPU 21 sends the present position information, which was determined on the basis of the position information from the GPS receiving section 27, to the switchboard 10 through the base stations 30 to 60.

The switchboard 10 stores the received position information of the mobile terminal 20 in a corresponding area for the mobile terminal 20 in the movement monitoring memory 90. The present and previous position information of the mobile terminal 20 are stored in the movement monitoring memory 90, and a moving speed calculation section 96 of the switchboard 10 compares the previous position information and the present position information stored in the movement monitoring memory 90 to calculate a difference every time the position information is received so as to calculate a moving speed of the mobile terminal 20, thereby judging whether the mobile terminal 20 is moving at a high speed. In other words, the mobile terminal 20 sends the position information to the switchboard 10 in every predetermined cycle, and the switchboard 10 compares the previous and present position information of the mobile terminal 20 to calculate a moving speed in every predetermined cycle. And, a communication control section 95 blocks incoming calls to the mobile terminal 20 according to the moving speed.

Here, not only the present and previous position information but also the past position information may be stored into the movement monitoring memory 90 to determine the average moving speed of the mobile terminal 20 in a predetermined period.

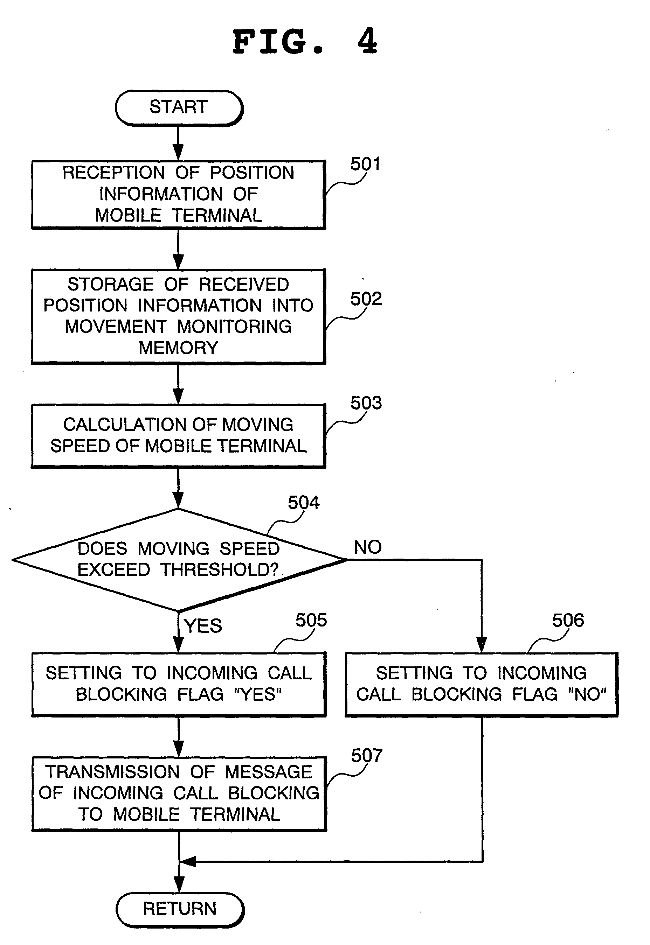

Then, an operation of the incoming call blocking system of this embodiment configured as described above will be described with reference to the flow chart of Fig. 4. Fig. 4 is a flow chart showing the contents of processing of the switchboard 10.

When it is assumed that the mobile terminal 20 is moving through the radio zone A, the radio zone B, the radio zone C and the radio zone D in this order as shown in Fig. 1, the mobile terminal 20 sends the present position information being calculated periodically according to the position information received by the GPS receiving section 27 to the base stations 30 to 60 of the radio zones A to D where the mobile terminal 20 is present now (arrows to the respective base stations 30 to 60 in Fig. 1), and the base stations 30 to 60 having received the position information from the mobile terminal 20 send the received position information to the switchboard 10.

The switchboard 10 receives the position information of the mobile terminal 20 sent from the base stations 30 to 60 (step 501) and stores the received position information into a corresponding area of the mobile terminal 20 of the movement monitoring memory 90 (step 502).

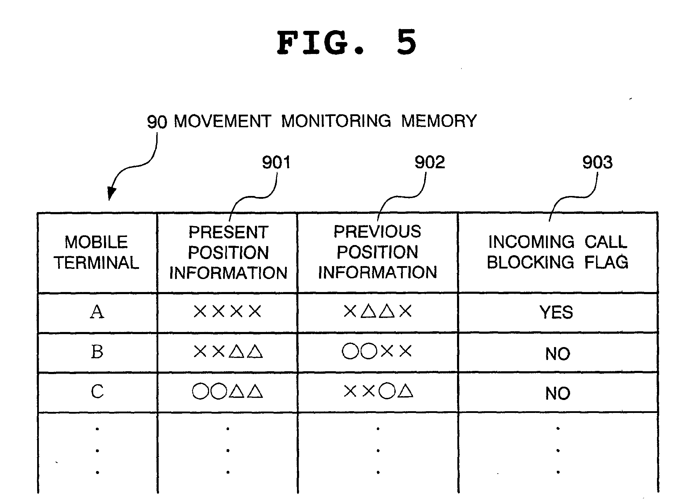

Present and previous position information 901, 902 of the mobile terminal 20 are stored in the movement monitoring memory 90 as shown in Fig. 5.

The moving speed calculation section 96 of the switchboard 10 compares the previous position information 902 and the present position information 901 stored in the movement monitoring memory 90 to calculates a difference every time the position information of the mobile terminal 20 is received so as to calculate a moving speed of the mobile terminal 20 (step 503), thereby judging whether the mobile terminal 20 is moving at a high speed. In other words, the mobile terminal 20 sends the position information to the switchboard 10 in a predetermined cycle, and the switchboard 10 compares the previous and present position information of the mobile terminal 20 to calculate a moving speed in every predetermined cycle.

And, the communication control section 95 of the switchboard 10 determines whether the moving speed of the mobile terminal 20 calculated in every predetermined cycle exceeds a predetermined "threshold" (step 504), and if it exceeds, judges that the mobile terminal 20 is moving at a high speed, sets an incoming call blocking flag 903, which is in an area of the mobile terminal 20 of the movement monitoring memory 90, to "YES" to block incoming calls to the mobile terminal 20 (step 505), and if the calculated moving speed of the mobile terminal 20 is lower than the threshold, sets the incoming call blocking flag 903 to "NO" to release the incoming call block (step 506).

In other words, the switchboard 10 blocks all the incoming calls to the mobile terminal 20 moving at a high speed, and releases the incoming call block after the mobile terminal 20 stops moving at a high speed.

When the incoming call blocking flag of the mobile terminal 20 is set to "YES", the switchboard 10 sends a message about the incoming call block to calling parties of the mobile terminal 20 (step 507).

The threshold having a moving speed previously determined can be set as desired. For example, when it is set to about 30 Km/h, every incoming call can be blocked while moving by car or train. For the mobile terminal 20 which is set the incoming call block, it is designed to indicate on the display section 22 of the mobile terminal 20 during the incoming call block that the incoming call block is in progress.

As described above, this embodiment can detect that the mobile terminal is moving at a high speed accurately in real time by obtaining the moving speed of the mobile terminal from the position information according to the GPS, so that it provides effects that it becomes possible to detect that the mobile terminal is moving at a high speed even in the same radio zone, the incoming call block can be performed quickly by swiftly detecting that the mobile terminal is moving at a high speed, the transition to a low speed or a stationary state can be detected quickly to release the incoming call block quickly, the incoming call block to the mobile terminal moving at a high speed can be effected without degrading the convenience of the mobile communication service, an accident of automobiles can be prevented, and manners in a train can be improved.

In this embodiment, it is configured to keep performing the transmission of position information from the mobile terminal 20 to the base stations 30 to 60 by the GPS in a predetermined cycle, but timing of sending the position information is not limited to the aforesaid contents. For example, when the radio zone information determined according to the control signals from the base stations 30 to 60 are used for the position registration request to the switchboard 10, the position information according to the GPS can be sent in a predetermined time. In such a case, when the position registration request is made, namely the position information according to the GPS is sent from the mobile terminal 20 at least two times while the mobile terminal 20 is moving among the radio zones A to D, the switchboard 10 calculates a moving speed. And, when the calculated moving speed of the mobile terminal 20 exceeds a predetermined threshold, it may be configured to continuously send the position information from the mobile terminal 20 until the moving speed of the mobile terminal 20 lowers to below the threshold according to a command from the switchboard 10. Thus, when the position information according to the GPS is transmitted for a given time only, position information is not transmitted while the mobile terminal 20 is stationary, so that a communication traffic can be alleviated.

The incoming call blocking system and method of the present invention can detect accurately in real time that the mobile terminal is moving at a high speed by obtaining the moving speed of the mobile terminal from the position information according to the GPS, so that it provides effects that it becomes possible to detect that the mobile terminal is moving at a high speed even in the same radio zone, the incoming call block can be performed quickly by detecting that the mobile terminal is moving at a high speed, the transition to a low speed or a stationary state can be detected quickly to release the incoming call block quickly, the incoming call block to the mobile terminal moving at a high speed can be effected without deteriorating the convenience of the mobile communication service, an accident of automobiles can be prevented, and manners in a train can be improved.

## Claims

1. A mobile communication system which is comprised of a mobile terminal (20), a switchboard (10) for controlling the connection of said mobile terminal and a plurality of base stations (30-60) for relaying a radio signal with said mobile terminal (20) to said switchboard (10), wherein said switchboard comprising:
average moving speed calculation unit (96) which calculates a moving speed of said mobile terminal (20) from the position information of said mobile terminal (20) which is sent from said mobile terminal; and
incoming call blocking unit (95) which blocks incoming calls to said mobile terminal (20) when the moving speed of said mobile terminal calculated by said moving speed calculation unit (96) exceeds a predetermined threshold.

2. The mobile communication system as set forth in claim 1, wherein
said mobile terminal (20) sends the position information of said mobile terminal which said mobile terminal has received on the basis of a GPS signal from a global positioning system satellite to said switchboard periodically.

3. The mobile communication system as set forth in claim 1, wherein
said mobile terminal (20) includes position information transmission unit (25) which send the position information of said mobile terminal to said switchboard through said base stations (30-60) periodically, and
said switchboard (10) includes storage unit (90) which stores the present and previous position information from said mobile terminal (20).

4. The mobile communication system as set forth in claim 1, wherein
said mobile terminal (20) comprises
position information obtaining unit (27) which obtains position information of said mobile terminal periodically according to a GPS signal from a global positioning system satellite, and
position information transmission unit (25) which sends the position information of said mobile terminal to said switchboard through said base stations periodically,
said switchboard (10) comprises storage unit (90) which stores the present and previous position information from said mobile terminal (20).

5. The mobile communication system as set forth in claim 1, wherein
said mobile terminal (20) comprises registration request transmission unit (21) which sends a registration request of the radio zones where said mobile terminal is present now to said switchboard (10) when said mobile terminal is moving among the radio zones of said base stations (30-60), and
said mobile terminal (20) sends the position information for a predetermined period when the position registration request is sent by said position registration request transmission unit (21).

6. The mobile communication system as set forth in claim 1, wherein
said mobile terminal (20) comprises
position information obtaining unit (27) which obtains position information of said mobile terminal periodically according to a GPS signal from a global positioning system satellite,
position information transmission unit (25) which sends the position information of said mobile terminal to said switchboard (10) through said base stations (30-60), and
registration request transmission unit (21) which sends a registration request of the radio zones where said mobile terminal is present now to said switchboard (10) when said mobile terminal moves among the radio zones of said base stations (30-60), and
sends the position information for a predetermined period when the registration request is sent by said registration request transmission unit (21).

7. An incoming call blocking method for a mobile communication system which is comprised of a mobile terminal, a switchboard for controlling the connection of said mobile terminal and a plurality of base stations which relay a radio signal with said mobile terminal to said switchboard, comprising the following steps of:
obtaining position information of said mobile terminal;
calculating a moving speed of said mobile terminal from the determined position information of said mobile terminal; and
blocking incoming calls to said mobile terminal when the calculated moving speed of said mobile terminal exceeds a predetermined threshold.

8. The incoming call blocking method for a mobile communication system as set forth in claim 7, wherein
position information of said mobile terminal is obtained according to a GPS signal from said global positioning system satellite, and
the obtained position information of said mobile terminal is sent to said switchboard periodically.

9. The incoming call blocking method for a mobile communication system as set forth in claim 7, wherein
said mobile terminal obtains a position of said mobile terminal periodically and sends the obtained position information of said mobile terminal to said switchboard,
said switchboard stores the position information from said mobile terminal, and
a moving speed of said mobile terminal is calculated from the stored position information of said mobile terminal.

10. The incoming call blocking method for a mobile communication system as set forth in claim 7, wherein
said mobile terminal sends a registration request of the radio zones where said mobile terminal is present now to said base stations when said mobile terminal is moving among the radio zones of said base stations, and
said mobile terminal sends the position information for a predetermined period when said mobile terminal sends the registration request.

11. A switchboard of a mobile communication system which is comprised of a mobile terminal (20), a switchboard (10) for controlling the connection of said mobile terminal and a plurality of base stations (30-60) for relaying a radio signal with said mobile terminal to said switchboard (10), comprising:
average moving speed calculation unit (96) which calculates a moving speed of said mobile terminal (20) from position information of said mobile terminal which is sent from said mobile terminal (20); and
incoming call blocking unit (95) which blocks incoming calls to said mobile terminal (20) when a moving speed of said mobile terminal calculated by said moving speed calculation unit (96) exceeds a predetermined threshold.

12. The switchboard of a mobile communication system as set forth in claim 11, which periodically receives the position information of said mobile terminal (20) obtained according to a GPS signal from the global positioning system satellite and calculates a moving speed of said mobile terminal (20) every time the position information is received.

13. The switchboard of a mobile communication system as set forth in claim 11, further comprising
storage unit (90) which stores the present and previous position information from said mobile terminal (20).
